# EUROPEAN PATENT APPLICATION

(11) **EP 4 324 585 A1**
(43) Date of publication of application: **21.02.2024**
(21) Application number: 23187311.8
(22) Date of filing: 24.07.2023
(51) Int. Cl.: B23H 1/04, B23H 1/10

(54) **ELECTRICAL-DISCHARGE MACHINING**

(30) Priority: 12.08.2022 GB 202211810
(71) Applicant: Rolls-Royce plc, London N1 9FX (GB)
(72) Inventor: Castro Palacios, Monica, Derby, DE24 8BJ (GB); Clare, Adam, Derby, DE24 8BJ (GB); Murray, James, Derby, DE24 8BJ (GB); Speidel, Alistair, Derby, DE24 8BJ (GB); Jackson-Crisp, Alexander, Derby, DE24 8BJ (GB); Norton, Andrew, Derby, DE24 8BJ (GB)
(74) Representative: Rolls-Royce plc

(57) **Abstract**

An electrical-discharge machining tool comprising a ground electrode (111), a moveable and activatable assistive electrode (103) and a cutting electrode (105), a first conduit (104) for supplying a dielectric and a second conduit for flushing dielectric material, wherein when used on a dielectric layer (102) on a substrate (101) the assistive electrode (103) is activated and positioned substantially between the ground electrode and the cutting electrode (105).

## Description

### Overview of the disclosure

The disclosure relates to a tool and a method of performing an electrical-discharge machining process. In particular, it relates to a tool and a method for performing electrical-discharge machining on a non-conductive substrate.

### Background of the Disclosure

Electrical-discharge machining is a method of increasing interest in fabrication and working of components. Electrical-discharge machining (EDM) works by utilising an electrical discharge created between two electrodes separated by a dielectric with the electrodes being subject to an electric voltage. As the voltage between the electrodes is increased it produces a breakdown in the dielectric which produces an arc between the two electrodes. The arc results in a breakdown of one of the electrodes, which is part of the workpiece to be machined, and consequently material is removed from it. The removed material can then be flushed away as the dielectric is replaced.

Electrical-discharge machining works well on conductive materials as the material to be machined can be used as the electrode, however it is incompatible materials that have a dielectric coating. To overcome this issue abrasive jets or laser machining have been used to remove the coating. However, these require the coating to be removed by one of these processes and then the equipment used to perform this process is replaced with an EDM tool once the coating has been removed, as such this increases the working time and to process the component. Consequently, there is a desire to produce an electrical discharge machine that can work on dielectric materials or dielectric coatings.

### Summary of the Disclosure

The scope of the disclosure is set out in the appended claims.

According to a first aspect of the disclosure there is presented an electrical-discharge machining tool comprising a ground electrode, a moveable and activatable assistive electrode and a cutting electrode, a first conduit for supplying a dielectric and a second conduit for flushing dielectric material, wherein when used on a dielectric layer on a substrate the assistive electrode is activated and positioned substantially between the ground electrode and the cutting electrode.

The ground electrode may be connected to the workpiece to be machined.

The dielectric supplied by the first conduit may be supplied at a high pressure.

The assistive electrode may have a flat tip.

The assistive electrode may be positioned directly between the ground and cutting electrode.

The second conduit may be located within the cutting electrode.

The control of the electrical discharge machine may be performed by a computer, having computer readable instructions.

The cutting electrode may be rotatable.

The cutting electrode may be positioned vertically, and the assistive electrode may be positioned angled relative to the cutting electrode.

The cutting electrode and the assistive electrode may be positioned angled relative to a vertical axis.

The assistive electrode may have a larger surface area than the cutting electrode.

The electrodes may be made from brass.

The dielectric may be selected from one of pressurised air, deionised water, noble gases or oil.

According to a second aspect of the disclosure there is provided a method of performing electrical discharge machining on a substrate comprising:
identifying an area to be machined,
positioning the assistive electrode up to the surface of the substrate,
positioning a first conduit to supply a dielectric to the area,
aligning the cutting tool with the surface of the substrate,
electrical-discharge machine the substrate; and
removing the assistive electrode from the area.

The substrate may be a multi material substrate having a dielectric layer which is machined first.

The method may further comprise modifying the parameters to allow for normal electrical discharge machining of the metallic substrate and electrical discharge machining the substrate.

The first conduit may apply the dielectric at high-pressure.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief Description of the Drawings

Embodiments of the invention will now be described by way of example with reference to the accompanying drawings in which:
Figure 1 presents a schematic representation of the electrical-discharge machine according to the present disclosure,
Figure 2 presents a schematic representation of the electrical-discharge machine according to the present disclosure,
Figure 3a-d presents schematic representation of the using the electrical-discharge machine to remove a dielectric layer; and
Figure 4 presents a flow chart of the operation of the dielectric machining tool according to the present disclosure.

### Detailed Description

Aspects and embodiments of the present disclosure will now be discussed with reference to the accompanying figures. Further aspects and embodiments will be apparent to those skilled in the art.

Certain materials, such as conductive materials which have dielectric coatings are unsuitable for processing using EDM. This is because the presence of the dielectric coating prevents an arc being able to form between the cutting and the ground electrodes. Consequently, this limits the usability of EDM as a machining process. In the aerospace industry, where the use of EDM is growing in interest and popularity, this lack of usability on materials having dielectric coatings is an issue as it prevents the use of the technique on turbine blades, which have non-conductive thermal barrier coatings applied to them. Therefore, this prevents current EDM techniques to be used to work on the blockage of cooling holes or similar problems.

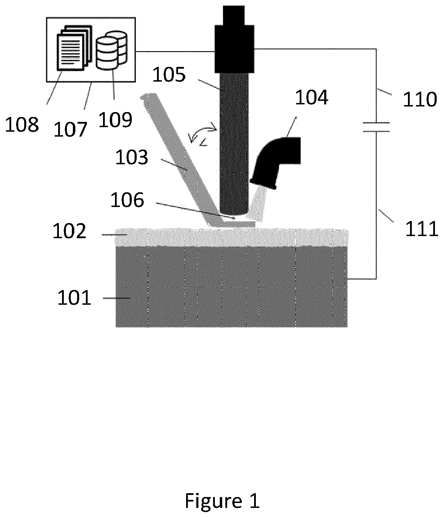

Figure 1 presents an example of an electrical-discharge machining tool that can be used to overcome the above limitations and can be used on materials that have a dielectric coating as well as processing metallic materials. The electrical-discharge machining tool 110 is shown positioned above a conductive substrate 101 that has a non-conductive coating 102 deposited on its surface. The electrical discharge machining tool has a ground electrode 111 that is connected to the metal substrate, a cutting electrode 105 mounted to a moving mechanism that allows the cutting electrode to advance towards the substrate. The cutting electrode may be able to rotate. The electrical discharge machining tool also features a moveable assistive electrode 103. The moveable electrode may be rotatable to remove it from the vicinity of the cutting electrode when not required. Additionally or alternatively, the assistive electrode may be retractable. This allows the electrical discharge machining tool to operate as a standard EDM when there is no dielectric layer present or after the dielectric layer has been removed. The assistive electrode shown in Figure 1 has a flattened tip that extends between the cutting electrode and the ground electrode. The assistive electrode in use when a dielectric layer is present may be positioned substantially between the ground and cutting electrode. The assistive electrode may overlap between 5-100% of the ground and cutting electrode when in use on a layer having a dielectric coating. The assistive electrode may be moveable to change the overlap between it and the cutting electrode. The assistive electrode may be removable. The assistive electrode is activatable such that it is supplied with a current when processing a dielectric layer and is not supplied with a current during standard operation. The tip of the assistive electrode may be any suitable size and/or shape. The electrical-discharge machining tool has a first conduit 104 that is used to supply dielectric fluid into a working area that surrounds the electrodes. The working area may be sealed to contain the dielectric fluid. The sealing may be done with a resiliently deformable material that sits around the working area containing the electrodes and conduit. The dielectric fluid may be supplied at a high pressure. For example, the dielectric fluid may be supplied at a pressure of 4-6 bar. A second conduit 106 is supplied to flush the dielectric material away. In figure 1 the second conduit is shown to be contained within the cutting electrode. However, this may be located at any suitable point. In figure 1 the electrical discharge machine is shown connected to a computer 107 to control the operation. The computer is shown having a memory storage module 109 for containing readable instructions 108 that are read and executed to allow the tool to perform its task. However, the electrical discharge machine may be controlled using any suitable means. The voltage applied may be set at a fixed value suitable to machine the material, Alternatively, it may be varied to modify the spark between the electrodes.

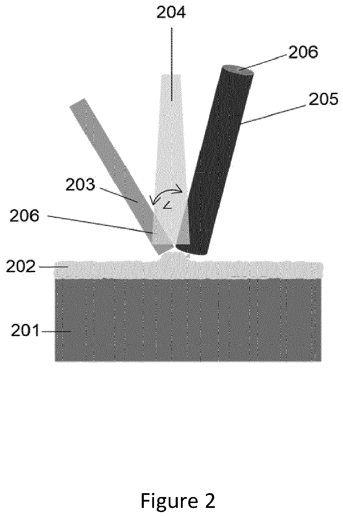

Figure 2 presents an example of the use of the electrical-discharge machining tool on an uneven surface of the dielectric material coated substrate. The metallic substrate 201 has been coated with an uneven layer of dielectric coating 202, thus creating ridges or bumps on the surface of the dielectric representing thicker sections of the dielectric material. The cutting electrode 205 is angled away from the vertical in this example. The assistive electrode 203 is shown inclined in an adjacent manner to the cutting electrode. The assistive electrode and/or the cutting electrode may be able to vary the tilt angle. This allows the possibility for the angle of the electrodes to change depending on the surface and/or material being processed. The electrodes may be separated so that they have an angle of anywhere up to 180° between them. The first conduit 204 is shown between the cutting and the assistive electrodes to supply the dielectric fluid to the cutting surface. The example shown has two second conduits 206 for flushing away the used dielectric from the cutting surface. Although, the example shows the second conduits located within the electrodes they may be positioned at any suitable location within the tool. The assistive electrode in this example is shown as a cylindrical rod having a cylindrical base.

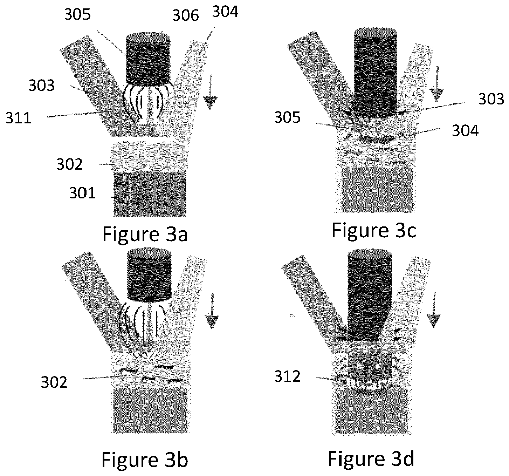

Figures 3a-d present an example of the operation of the electrical-discharge machine tool breaking down the dielectric coating. In figure 3a, the assistive electrode 303 is positioned in the desired location relative to the point at which the dielectric coating is required to be removed. The cutting electrode 305 is also positioned relative to the assistive electrode, and the conduit for supplying the dielectric fluid is also positioned. With the electrodes being positioned, so that they can be lowered towards the surface. Whilst this is done the supply of dielectric fluid can be initiated from the first conduit 304. The system can then be energised such that a plasma 311 is formed. The plasma is generated in the region around the electrodes and the temperature of the system rises. In Figure 3b the dielectric fluid supplied by the first conduit 304 is constantly flushed by the second conduit. This flushing of the dielectric allows for any material that has been removed from the dielectric material from the surface to be removed from the working area. This flushing is performed whilst the plasma 311 is formed. In figure 3c the temperature of the work area has reached a point above the melting point of the ceramic/dielectric coating, through the plasma heating the area. Consequently, the coating starts to melt and is removed due to the flushing of the dielectric fluid. In figure 3d the cutting electrode 305 continues to move towards the substrate 301. It is able to do this as the layer of ceramic/dielectric has been melted and flushed away by the generated plasma. Once the ceramic/dielectric layer has been removed the substrate under the coating may be removed using standard electric-discharge machining techniques. The tool may be used as a standard EDM tool in addition to its use for removing dielectric. In such cases the assistive electrode may not be used, and the arc can be formed between the electrode and the substrate. Therefore, the tool may continue to process the substrate under the coating. Furthermore, the tool can be used in situations in which a dielectric is not present.

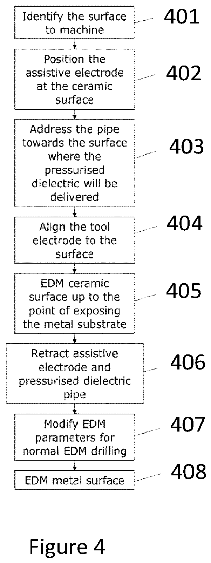

Figure 4 presents a flow chart of the operation of the electrical discharge machining tool according to the present disclosure. In step 401 the area on the coated substrate area machined is identified. This could be for example from designs and/or drawings or through optical or physical inspection of the component. In step 402 the assistive electrode is positioned close to the surface, up to the point of contact with the dielectric/ceramic layer or alternatively onto the direct substrate. In step 403 the conduit that is used to deliver the dielectric is positioned relative to the surface. In this the best results are achieved if the conduit is placed as close as possible to the cutting and the assistive electrodes. In step 404 the cutting electrode is aligned with the area of the surface that is going to be machined. In step 405 the dielectric/ceramic is removed through EDM that is deep enough for the metal substrate is exposed or in the case of a metallic substrate to a point at which the processing is complete. If the process is carried out on a ceramic/dielectric layer, then this ceramic/dielectric layer is only removed in the region that is in the vicinity of the cutting electrode. In step 406 after the dielectric/ceramic is removed then the assistive electrode and first conduit are moved away or removed from the set up. The electrical supply to the assistive electrode may also be turned off. In step 407 the process is continued with adapted parameters that allows for a standard EDM process to be carried out if necessary, once the coating has been removed. In step 408 further hole drilling occurs using a normal EDM process. Steps 407 and 408 can be omitted if it is only the coating that is desired to be removed from an area.

The electrodes may be made of any suitable material. The electrodes may be made from a suitable metallic material. For example, the electrodes may be made from brass. The dielectric fluid supplied into the work area may be any suitable dielectric. The dielectric fluid may be gaseous or a liquid. The dielectrics may be pressurised air or deionised water. Alternatively, other types of gases such as argon may be used or other types of liquids such as oil may be used.

The method and tool are beneficial as they allow the system to be used for either in-situ or ex-situ operations. As well as allowing for removing materials on flat surfaces or cavities. This allows the method to be used in complex areas such as working on cooling holes within blades in a gas turbine engine. As discussed above the process does not need to be used in conjunction with removal of the substrate and as such can be used in repair processes which only require removal of the ceramic/dielectric layer. Furthermore, the electrical discharge method and too brings cost effective advantages for an operator as it utilises the well-known technique of EDM and can be used to treat materials regardless of their level of conductivity. It also has the benefit that the method can also be easily modified and adapted according to type of manufacturing process, and size and location of area to be machined and can be applied on all types of surface profiles.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An electrical-discharge machining tool comprising a ground electrode, a moveable and activatable assistive electrode and a cutting electrode, a first conduit for supplying a dielectric and a second conduit for flushing dielectric material, wherein when used on a dielectric layer on a substrate the assistive electrode is activated and positioned substantially between the ground electrode and the cutting electrode.

2. The electrical discharge machining tool according to claim 1, wherein the dielectric supplied by the first conduit is supplied at a high pressure.

3. The electrical-discharge machining tool according to claim 1 or claim 2, wherein the assistive electrode has a flat tip.

4. The electrical-discharge machining tool according to any preceding claim, wherein the assistive electrode is positioned directly between the ground and cutting electrode.

5. The electrical-discharge machining tool according to any preceding claim, wherein the second conduit is located within the cutting electrode.

6. The electrical-discharge machine tool according to any preceding claim, wherein the control of the electrical discharge machine is performed by a computer, having computer readable instructions.

7. The electrical-discharge machining tool according to any preceding claim, wherein the cutting electrode is rotatable.

8. The electrical-discharge machining tool according to any preceding claim, wherein in use on a dielectric substrate the cutting electrode is positioned vertically, and the assistive electrode is positioned angled relative to the cutting electrode.

9. The electrical-discharge machining tool according to any one of claims 1 to 7, wherein the cutting electrode and the assistive electrode are positioned angled relative to a vertical axis.

10. The electrical-discharge machining tool according to any preceding claim, wherein the assistive electrode has a larger surface area than the cutting electrode.

11. The electrical discharge machining tool as claimed in any preceding claim, wherein the electrodes are made from brass.

12. The electrical discharge machining too according to any preceding claim, wherein the dielectric is selected from one of pressurised air, deionised water, noble gases or oil.

13. A method of performing electrical discharge machining on a dielectric coated substrate comprising:
identifying an area to be machined,
positioning the assistive electrode up to the surface of the dielectric layer,
positioning a first conduit to supply a dielectric to the area,
aligning the cutting tool with the surface of the dielectric layer,
electrical-discharge machine the dielectric layer to a point exposing the metallic substrate; and
removing the assistive electrode from the area.

14. The method of claim 13, wherein the method further comprises modifying the parameters to allow for normal electrical discharge machining of the metallic substrate and electrical discharge machining the substrate.

15. The method of claim 13 or 14, wherein the first conduit applies the dielectric at high-pressure.
